# EUROPEAN PATENT SPECIFICATION

(11) **EP 3 016 865 B1**
(45) Date of publication and mention of the grant of the patent: **21.08.2019**
(21) Application number: 14742434.5
(22) Date of filing: 02.07.2014
(51) Int. Cl.: B65B 53/02, B65D 75/00, F16L 47/22, B32B 27/08, B29C 55/02, C08J 5/22, C08L 23/08, B32B 27/30, C08J 5/18, B32B 27/32, B29C 61/00

(54) **HEAT ACTIVATED SHRINK FILMS**
WÄRMEAKTIVIERTE SCHRUMPFFOLIEN
FILMS THERMORÉTRACTABLES

(30) Priority: 02.07.2013 US 201361842305 P
(43) Date of publication of application: 11.05.2016
(73) Proprietor: Avery Dennison Corporation, Glendale, CA 91203 (US)
(72) Inventor: PHAM, Hoang, T., Painesville, OH 44077 (US); XUE, Anle, Mentor, OH 44060 (US); PATIL, Yatin, Mayfield Heights, OH 44124 (US)
(74) Representative: Müller-Boré & Partner Patentanwälte PartG mbB
(86) International application number: PCT/US2014/045288
(87) International publication number: WO 2015/003077

(56) References cited:
- EP-A1- 1 526 965
- US-A1- 2008 292 225
- US-A1- 2011 212 338
- US-A1- 2012 021 151
- US-B2- 6 767 966

## Description

### BACKGROUND OF THE INVENTION

Shrink films have numerous uses, including as product labels and for packaging. The present invention further provides embodiments of shrink films and also methods for preparing shrink films. Shrink films comprising cyclic polyolefins are disclosed, see for example US 2012/021151 A1; US 2011/212338 A1 and US 6 767 966 B2.

### SUMMARY OF THE INVENTION

In one embodiment, the invention includes a shrink film with at least a first shrinkable film layer according to claim 1. The shrinkable film layer includes a blend of a shrinkable polymer having a high glass transition temperature, and a shrinkable polymer having a low glass transition temperature.

In another embodiment, the present invention includes a method for preparing a shrinkable film layer according to claim 11. The method includes preparing a blend comprising a shrinkable polymer having a high glass transition temperature and a shrinkable polymer having a low glass transition temperature, and forming a film from the blend.

The following description illustrates one or more embodiments of the invention and serves to explain the principles and exemplary embodiment of the invention.

### BRIEF DESCRIPTION OF THE DRAWINGS

Fig. 1 is a graph of oven shrink values of exemplary films; and

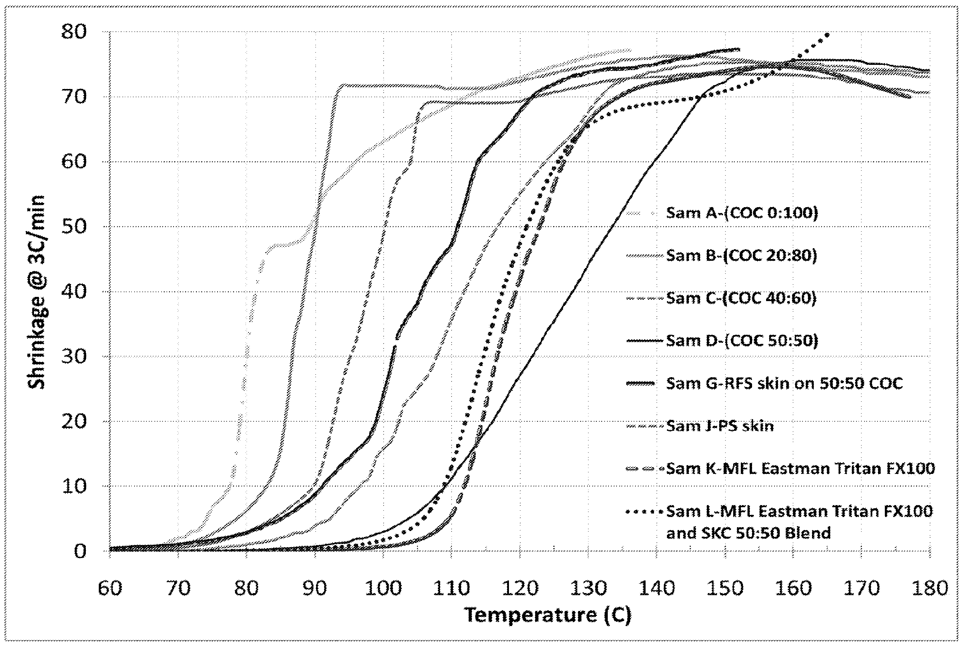

Fig. 2 is a graph of DMA shrink curves of exemplary films.

### DETAILED DESCRIPTION OF EXEMPLARY EMBODIMENTS

Reference will now be made in detail to exemplary embodiments of the present invention, one or more examples of which are illustrated in the accompanying drawings. Each example is provided by way of explanation of the invention and not by limitation of the invention. For instance, features illustrated or described as part of one embodiment may be used on another embodiment to yield a still further embodiment. Thus, it is intended that the present invention covers such modifications and variations as come within the scope of the appended claims and their equivalents.

As is understood in the art, shrink films are films that shrink in at least one direction when heated to a shrink initiation temperature. In some embodiments, shrink films of the present invention may shrink only in the machine direction upon exposure to a shrink initiation temperature. In other embodiments, shrink films may alternatively or additionally shrink in the transverse direction (also called the cross direction) upon exposure to a shrink initiation temperature. In still other embodiments, shrink films of the present invention may shrink only in the machine direction upon exposure to a shrink initiation temperature and may also grow (or expand) in the cross direction.

The films of the present invention have at least one film layer prepared using (i) at least one cyclic olefin copolymer (COC) having a high glass transition temperature, and (ii) at least one COC having a low glass transition temperature. As used herein, high Tg indicates a glass transition in the range of 85° C to about 165° C and low Tg indicates a glass transition temperature less than 85° C. The foregoing ranges shall include each intermittent value and each intermittent range therein.

Any combination of one or more shrinkable COGs having a high Tg and one or more shrinkable COCs having a low Tg are within the scope of the present invention. In some particular embodiments, polymers having high Tg may include polymers having a Tg in the range of about 85° C to about 160° C. In other embodiments, polymers having a Tg of about 90° C to about 155° C may be used as a high Tg polymer. In addition, in some particular embodiments, polymers having a Tg from about -100° C to about 85° C may be used as a low Tg polymer. In some embodiments, polymers having a Tg from about -60° C to about 85° C may be used as a low Tg polymer. In yet other embodiments, polymers having a Tg in the range of about -40° C to 83° C may be used as a low Tg polymer. In still other embodiments, polymers having a Tg in the range of about -35° C to about 82° C may be used as a low Tg polymer. In yet other embodiments, polymers having a Tg of less than about 80° C may be used as a low Tg polymer. Each of the foregoing ranges shall include each intermittent value and each intermittent range therein.

Any suitable blend of high and low Tg COCs may be used in particular embodiments of the present invention. In some embodiments, a shrinkable layer may include about 1% to about 99% by weight of shrinkable polymers having a high glass transition temperature and about 1% to about 99% by weight shrinkable polymers having a low glass transition temperature, including each intermittent range therein for each. In some embodiments, a shrinkable layer may include about 10% to about 80% by weight of shrinkable polymers having a high glass transition temperature and about 20% to about 90% by weight shrinkable polymers having a low glass transition temperature.

In addition, although embodiments herein are discussed in the context of glass transition temperatures, the present invention also includes embodiments wherein the shrinkable layer polymer blend is alternatively based upon heat deflection temperatures (also called the heat distortion temperatures) (HDT). In this regard, such shrinkable layers may comprise a blend of (i) at least one polymer, such as a COC, having a high heat deflection temperature, and (ii) at least one polymer, such as a COC, having a low heat deflection temperature. As used herein, a high heat deflection temperature includes temperatures above about 75° C, and low heat deflection temperature includes temperatures at about or below about 75° C.

Shrinkable layers of the present invention having a blend of a high Tg COC and a low Tg COC include a linear low density polyethylene or low density polyethylene. In addition, such layers may also contain other components such as pigments, fillers, stabilizers, light protective agents or other suitable modifying agents if desired. These film layers may also contain anti-block, slip additives and anti-static agents. Useful anti-block agents include inorganic particles, such as clays, talc, calcium carbonate and glass. Slip additives useful in the present invention include polysiloxanes, waxes, fatty amides, fatty acids, metal soaps and particulate such as silica, synthetic amorphous silica and polytetrafluoroethylene powder. Anti-static agents useful in the present invention include alkali metal sulfonates, polyether-modified polydiorganosiloxanes, polyalkylphenylsiloxanes and tertiary amines.

In some embodiments, shrinkable layers of the present invention may include from about 5% to about 50% by weight of a semi-crystalline polymer. By way of example, such semi-crystalline polymers may include olefinic polymers, such as linear low density polyethylene, low density polyethylene, and other polyethylenes. In some embodiments having a shrinkable layer with a blend of high and low Tg COC polymers, the shrinkable layer may include one or more semi-crystalline polymers having a density in the range of about 0.90 g/cc to about 0.94 g/cc. In other embodiments, shrinkable layers having a blend of high and low Tg COC polymers may include semi-crystalline polymers having a density in the range of about 0.905 g/cc to about 0.935 g/cc. In still other embodiments, shrinkable layers having a blend of high and low Tg COC polymers may include semi-crystalline polymers having a density in the range of about 0.91 g/cc to about 0.93 g/cc.

Films of the present invention are multilayer films wherein at least one layer is prepared using a blend of high and low Tg COCs as defined and a core layer is comprised of elastomers. In some embodiments, shrinkable layers having at least one high Tg polymer and one low Tg polymer may constitute at least about 5% of the total thickness of a multilayer film. In some embodiments, shrinkable layers having a blend of at least one high Tg polymer and one low Tg polymer may constitute about 2% to about 30% of the total thickness of a multilayer film. In other embodiments, such high Tg and low Tg blend shrinkable layers may constitute about 5% to about 25% of the total thickness of a multilayer film. In addition, in some embodiments, such as in Samples F-H discussed below, a multilayer film may have a first shrink layer that includes a high and low Tg blend and at least a second shrink layer that does not include a high and low Tg blend.

In some multilayer film embodiments of the present invention, other layers may include, by way of example, skin layers, tie layers, print layers, and adhesive layers.

The following samples provide certain exemplary embodiments in accordance with some aspects of the present invention. As shown below for Samples A-E are films having a shrinkable layer with a high Tg COC (indicated as TOPAS 5013) and a low Tg COC (indicated as TOPAS 8007), and the weight ratio of high Tg COC to low Tg COC is varied for each sample. In addition, Samples F-H show exemplary compositions for embodiments of a film skin layer wherein a tie layer includes a blend of high Tg COC and low Tg COC. In similar fashion, the weight ratio of high Tg polymer to low Tg polymer in the tie layer is varied between these samples. Samples I-J use a high Tg polystyrene (indicated as Polystyrene EA3400 and having a Tg of about 102 °C) and low Tg styrene ethylene butylene styrene polymers (SEBS) (indicated as Kraton G2832 and having a Tg of -42 °C). Finally, Sample K employs a high Tg PETG (indicated as FX100, which is available from Eastman as Tritan Copolyester FX100 and has a Tg of 110 °C) and Sample L employs FX100 and a low Tg PETG (indicated as SKC, which is available from SK Chemicals as Skygreen K2012 and has a Tg of 82 °C). As reflected in the data below, the layer percentage is a volumetric percentage reflecting the thickness ratio of the layer.

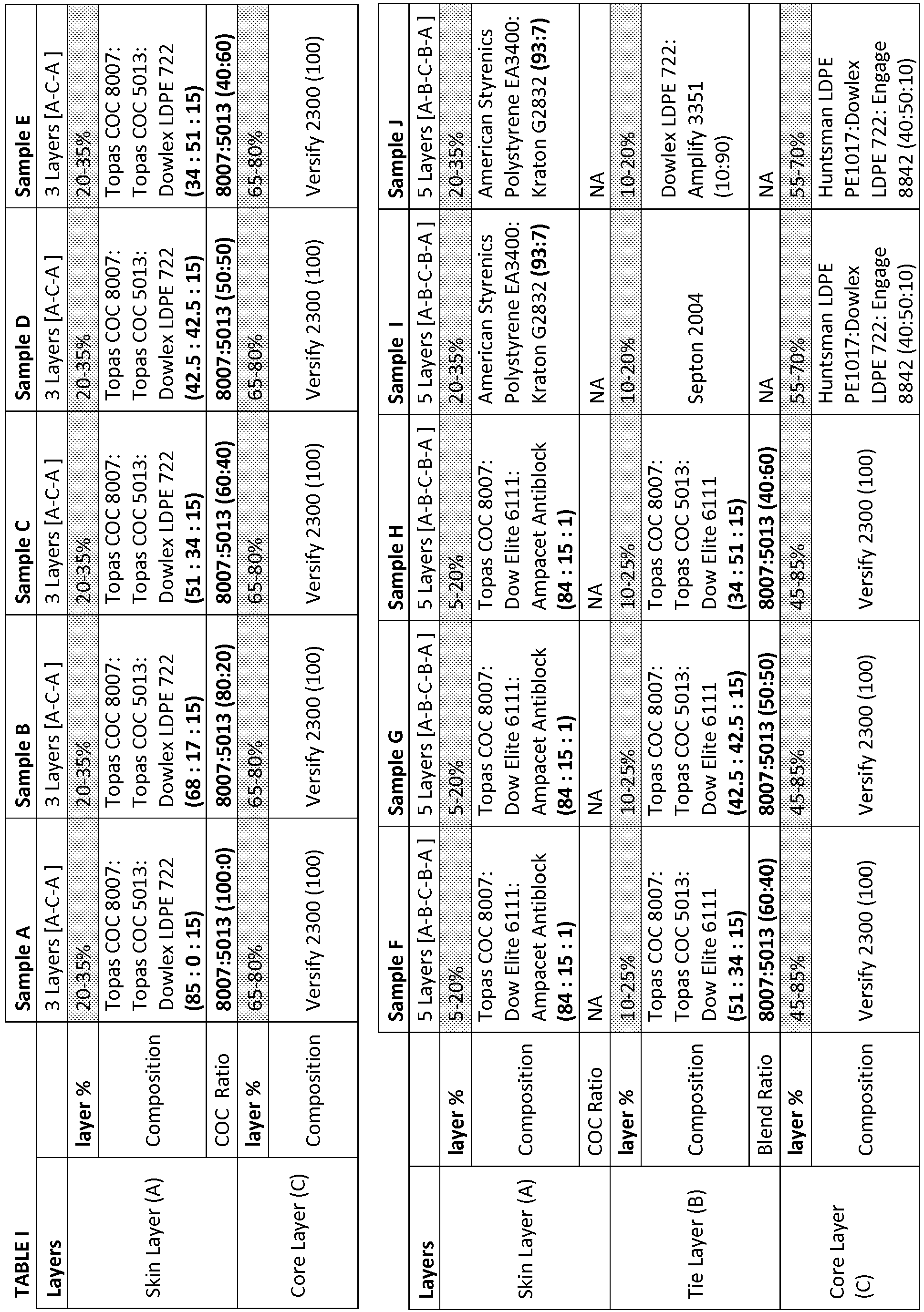

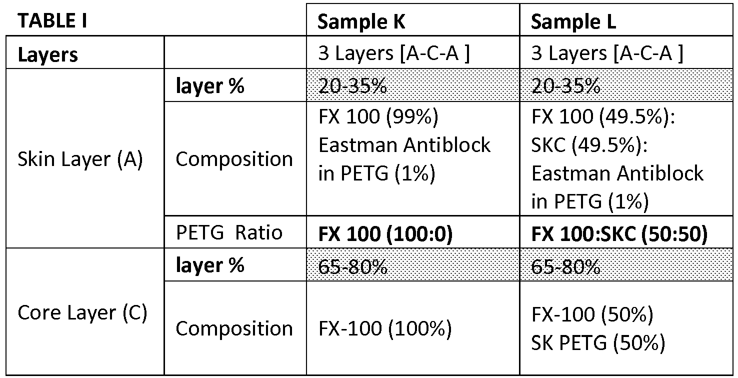

As used in certain examples in Table I, the low Tg polymer was Topas COC 8007 (which has a HDT/B of 75° C) and the high Tg polymer was Topas COC 5013 (which has a HDT/B of 130° C), wherein both are available from Topas Advanced Polymers, Inc. In addition, low density polyethylene products used are referenced as Dowlex LDPE (which has a density of 0.918 g/cm³) and Dow Elite 6111 (which has a density of 0.912 g/cm³ and is an enhanced polyethylene resin with an ethylene-octene copolymer), both of which are available from the Dow Chemical Company. Furthermore, Versify 2300 is an elastomer having a density of 0.867 g/cm³ and also is available from The Dow Chemical Company. The antiblock referenced is available under the brand name Crystal Clear 102077 Antiblock Additive PE MB, which is available from Ampacet Corporation. With regard to Sample K and L, as noted above, the high Tg material was PETG (indicated as FX100, which is available from Eastman as Tritan Copolyester FX100 and has a Tg of 110 °C) and, for Sample L employs FX100 and a low Tg PETG (indicated as SKC, which is available from SK Chemicals as Skygreen K2012 and has a Tg of 82 °C).

In other examples in Table I, polystyrene was the high Tg polymer, and EA3400 indicates a polystyrene product available from American Styrenics, LLC, and SEBS was the low Tg polymer, wherein G2832 indicates a Kraton G2832 is a styrene-ethylene/butylenes-styrene (SEBS) block copolymer available from Kraton Polymers. In addition, LDPE indicates low density polyethylene, specifically Dowlex LDPE 722 available from The Dow Chemical Company, Septon 2004 indicates a styrene ethylene propylene styrene block copolymer available under the brand name Septon 2004 from Kuraray CO., Ltd., Amplify 3351 indicates a maleic anhydride grafted polymer available under the brand name Amplify 3351 from The Dow Chemical Company, Huntsman LDPE PE1017 indicates low density polyethylene under the brand name PE1017 available from Huntsman Corporation, Dowlex LDPE 722 indicates a low density polyethylene available under the brand name Dowlex LDPE 722 from The Dow Chemical Company, and Engage 8842 indicates a polyolefin elastomer available from the Dow Chemical Company. One of ordinary skill in the art readily appreciates that the foregoing specific references to compounds in Table I are exemplary in nature only and that other components with suitable properties may be used in addition to or instead of these components.

Samples A-L were also tested for MD oven shrinkage, DMA shrink curve and for various optical properties. The MD oven shrinkage was tested by punching 4" by 4" film portions for the samples. For each sample, a different portion was placed in an oven that was one of the temperatures listed in the data below. The portion was heated for five minutes and then measured to determine the dimensional change (shrinkage or growth) in each direction. The reported values below are the percentage shrink in the machine direction from the original portion. The DMA shrink testing was conducted for each sample by placing a strip of the sample in a rheometer and applying a small load to strip in the tension direction to avoid curling. Heat was then applied at a rate of 3° C/ min. The strip was be monitored and the data below, which provides the change in dimension as a function of temperature, were recorded. The optical properties were tested using the following procedures. For gloss, specular gloss of plastic films was measured at 60° pursuant to Standard ASTM D2457. Transmittance, haze, and clarity were determined by measuring the resultant light passed through the plastic film from a light source pursuant to Standard ASTM D2457.

Although the samples above indicate layer percentage ranges, the actual testing was conducted on films have the following layer percentages:

### Samples A - E

Skin layer 25% total (12.5% on each side)
Core layer 75% total

### Samples F - H

Skin layer 10% total (5% on each side)
Tie layer 20% total (10% each side)
Core layer 70% total

### Samples I - J

Skin layer 25% total (12.5% on each side)
Tie layer 14% total (7% each side)
Core layer 61% total

### Samples K - L

Skin layer 25% total (12.5% on each side)
Core layer 75% total

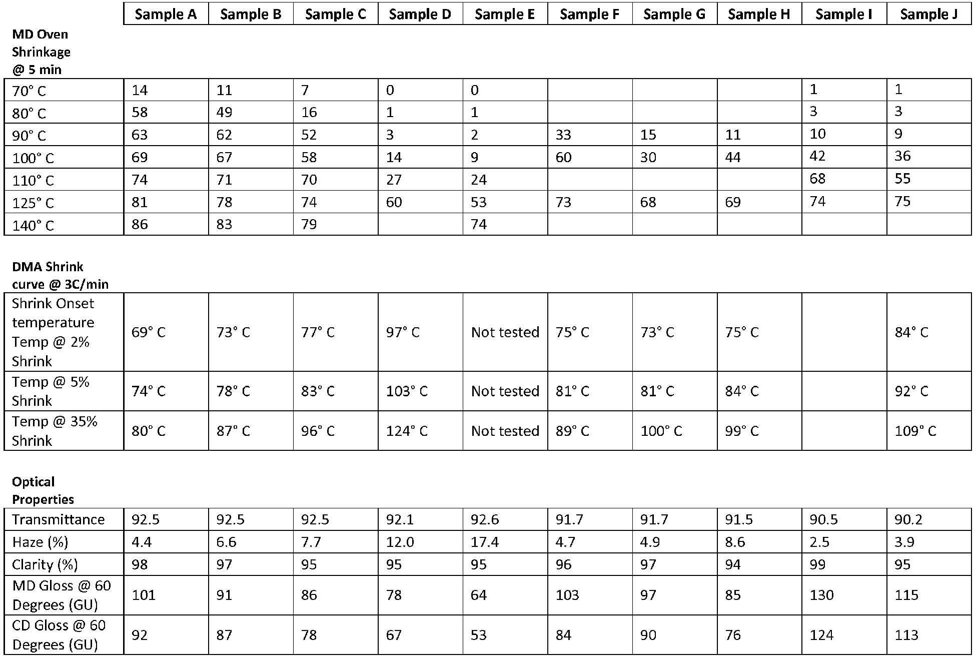

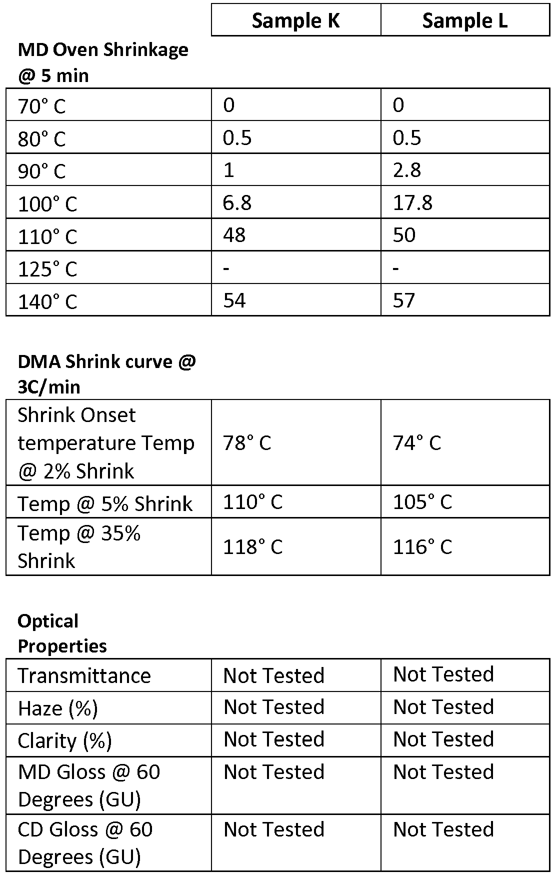

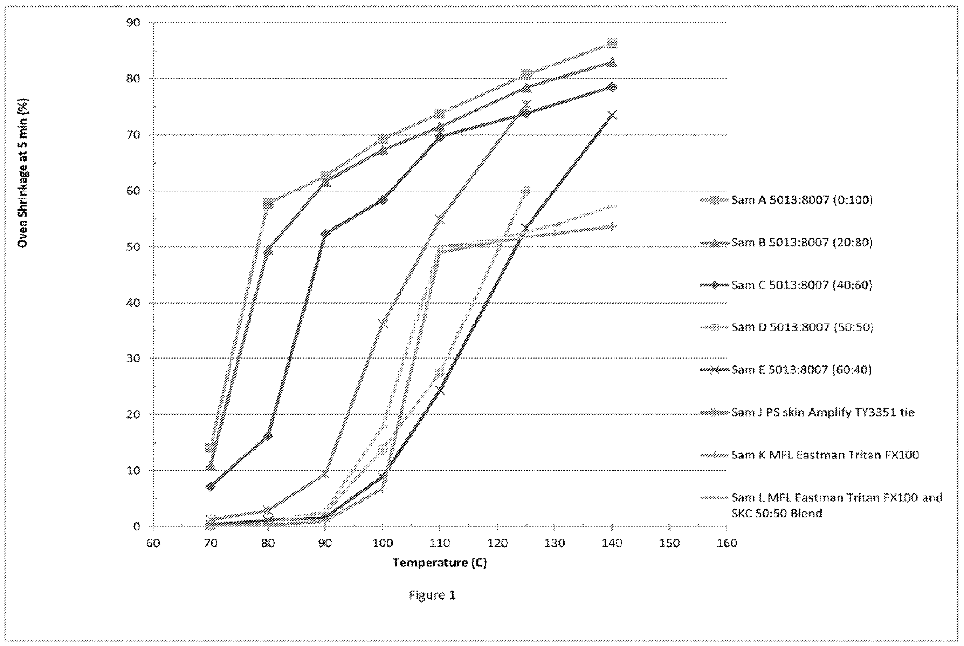

As indicated in the results above, the shrinkage properties of a film may be varied based upon the ratio of high Tg polymer to low Tg polymer. Furthermore, as shown in Fig. 1, the initiation shrink temperature is a non-linear function of high Tg polymer to low Tg polymer. As such, this shrink initiation temperature may be adjusted in particular embodiments by varying the ratio of high Tg polymer to low Tg polymer in the shrinkable layer. In general, as shown in the figures, it was generally observed that an increase in the high Tg component yielded an increase in the shrink initiation temperature. In addition, as shown by the comparison of Sample K and Sample L, the blended skin layer in Sample L of high Tg PETG and low Tg PETG (in this case, a low Tg of about 82 °C) resulted in shifting the activation temperature of the film as compared with the high Tg PETG layer of Sample K.

Appreciating this correlation, in some embodiments of the present invention, the shrink initiation temperature may be controlled for a film by the ratio of high Tg polymer to low Tg polymer in the shrinkable film layer. For example, through the blending of such components in a film layer, the shrink initiation temperature may be adjusted to a desirable level. As a result, using extrapolations from testing various film layers having different ratios of high Tg polymers to low Tg polymers, the data may be extrapolated to determine the necessary ratio to achieve a certain shrink initiation temperature for a film. Such embodiments of the present invention allow a film to be prepared with a suitable shrink initiation temperature, which may avoid the film undesirably shrinking at normal storage or transportation temperatures.

These and other modifications and variations to the present invention may be practiced by those of ordinary skill in the art without departing from the scope of the present invention, which is more particularly set forth in the appended claims. In addition, it should be understood that aspects of the various embodiments may be interchanged in whole or in part. Furthermore, those of ordinary skill in the art will appreciate that the foregoing description is by way of example only, and it is not intended to limit the invention as further described in such appended claims. Therefore, the scope of the appended claims should not be limited to the exemplary description of the versions contained herein.

## Claims

1. A shrink film with at least a first shrinkable film layer comprising a blend of
a cyclic polyolefin copolymer having a high glass transition temperature in the range of 85 °C to 165 °C, and
a cyclic polyolefin copolymer having a low glass transition temperature of less than 85 °C,
wherein the first shrinkable film layer further comprises low density polyethylene or linear low density polyethylene, and
wherein the shrink film further comprises a core layer comprised of elastomers.

2. The shrink film of claim 1, wherein the high glass transition temperature is in the range of 90 °C to 160 °C.

3. The shrink film of claim 1 or 2, wherein the low glass transition temperature is in the range of -60 °C to 84 °C.

4. The shrink film of any one of claims 1 to 3, wherein the shrink film is a single layer film or a multilayer layer film.

5. The shrink film of claim 4, wherein the shrink film is a multilayer film and a second shrinkable film layer comprises a shrinkable polymer having a high glass transition temperature and a shrinkable polymer having a low glass transition temperature.

6. The shrink film of any one of claims 1 to 5, wherein the shrink film comprises an elastomer.

7. The shrink film of any one of claims 1 to 6, wherein the weight ratio of the cyclic polyolefin copolymer having a high glass transition temperature and the cyclic polyolefin copolymer having a low glass transition temperature in the first shrinkable film layer is in the range of 60:40 to 1:99.

8. The shrink film of any one of claims 1 to 7, wherein the core layer is further comprised of a material selected from the group consisting of low density polyethylene, linear low density polyethylene, medium density polyethylene, ethyl vinyl acetate, polypropylene, plastomers, styrene ethylene butylene styrene, poly(styrene-butadiene-styrene), poly(styrene-isoprene-styrene) (SIS), terephthalate glycol-modified (PETG), polyethylene terephthalate (PET), and blends thereof.

9. The shrink film of any one of claims 1 to 8, wherein the film is a multilayer film and layers comprising a blend of at least one high Tg polymer and one low Tg polymer constitute at least about 5 % of the total thickness of a multilayer film.

10. The shrink film of any one of claims 1 to 8, wherein the film is a multilayer film and layers comprising a blend of at least one high Tg polymer and one low Tg polymer constitute about 2 % to about 30 % of the total thickness of the film.

11. A method for preparing a shrinkable film, wherein the method comprises:
preparing a blend as indicated in any one of claims 1 to 10, and
forming a film from the blend.

12. The method of claim 11, wherein the film is a single layer film or a multilayer film prepared from the blend.

13. The method of claim 11 or 12, wherein the film is formed by extrusion.

## Patentansprüche

1. Schrumpffolie mit mindestens einer ersten Schrumpffolienschicht, umfassend ein Blend von einem cyclischen Polyolefincopolymer mit einer hohen Glasübergangstemperatur in dem Bereich von 85°C bis 165°C und einem cyclischen Polyolefincopolymer mit einer niedrigen Glasübergangstemperatur von weniger als 85°C,
wobei die erste Schrumpffolienschicht weiter Polyethylen niedriger Dichte oder lineares Polyethylen niedriger Dichte umfaßt, und
wobei die Schrumpffolie weiter eine Kernschicht, umfassend Elastomere, umfaßt.

2. Schrumpffolie gemäß Anspruch 1, wobei die hohe Glasübergangstemperatur in dem Bereich von 90°C bis 160°C ist.

3. Schrumpffolie gemäß Anspruch 1 oder 2, wobei die niedrige Glasübergangstemperatur in dem Bereich von -60°C bis 84°C ist.

4. Schrumpffolie gemäß einem der Ansprüche 1 bis 3, wobei die Schrumpffolie eine Einzelschichtfolie oder eine Mehrschichtfolie ist.

5. Schrumpffolie gemäß Anspruch 4, wobei die Schrumpffolie eine Mehrschichtfolie ist und eine zweite Schrumpffolienschicht ein schrumpffähiges Polymer mit einer hohen Glasübergangstemperatur und ein schrumpffähiges Polymer mit einer niedrigen Glasübergangstemperatur umfaßt.

6. Schrumpffolie gemäß einem der Ansprüche 1 bis 5, wobei die Schrumpffolie ein Elastomer umfaßt.

7. Schrumpffolie gemäß einem der Ansprüche 1 bis 6, wobei das Gewichtsverhältnis des cyclischen Polyolefincopolymers mit einer hohen Glasübergangstemperatur und des cyclischen Polyolefincopolymers mit einer niedrigen Glasübergangstemperatur in der ersten Schrumpffolienschicht in dem Bereich von 60:40 bis 1:99 ist.

8. Schrumpffolie gemäß einem der Ansprüche 1 bis 7, wobei die Kernschicht weiter ein Material, ausgewählt aus der Gruppe, bestehend aus Polyethylen niedriger Dichte, linearem Polyethylen niedriger Dichte, Polyethylen mittlerer Dichte, Ethylvinylacetat, Polypropylen, Plastomeren, Styrol-Ethylen-Butylen-Styrol, Poly(styrol-butadien-styrol), Poly(styrol-isopren-stryol) (SIS), Terephthalat Glycol-modifiziert (PETG), Polyethylenterephthalat (PET) und Blends davon, umfaßt.

9. Schrumpffolie gemäß einem der Ansprüche 1 bis 8, wobei die Folie eine Mehrschichtfolie ist und Schichten, umfassend ein Blend von mindestens einem Polymer mit hoher Tg und einem Polymer mit niedriger Tg, mindestens etwa 5% der Gesamtdicke einer Mehrschichtfolie konstituieren.

10. Schrumpffolie gemäß einem der Ansprüche 1 bis 8, wobei die Folie eine Mehrschichtfolie ist und Schichten, umfassend ein Blend von mindestens einem Polymer mit hoher Tg und einem Polymer mit niedriger Tg, etwa 2% bis etwa 30% der Gesamtdicke der Folie konstituieren.

11. Verfahren zur Herstellung einer Schrumpffolie, wobei das Verfahren umfaßt:
Herstellen eines Blends, wie in einem der Ansprüche 1 bis 10 angeführt, und
Formen einer Folie aus dem Blend.

12. Verfahren gemäß Anspruch 11, wobei die Folie eine Einzelschichtfolie oder eine Mehrschichtfolie, hergestellt aus dem Blend, ist.

13. Verfahren gemäß Anspruch 11 oder 12, wobei die Folie durch Extrusion gebildet worden ist.

## Revendications

1. Film rétractable comprenant au moins une première couche de film rétractable comprenant un mélange d'un copolymère de polyoléfine cyclique ayant une température de transition vitreuse élevée dans la plage allant de 85°C à 165°C, et d'un copolymère de polyoléfine cyclique ayant une température de transition vitreuse faible inférieure à 85°C,
où la première couche de film rétractable comprend en outre un polyéthylène basse densité ou un polyéthylène basse densité linéaire, et
où le film rétractable comprend en outre, une couche de coeur composée d'élastomères.

2. Film rétractable selon la revendication 1, où la température de transition vitreuse élevée se situe dans l'intervalle allant de 90°C à 160°C.

3. Film rétractable selon la revendication 1 ou 2, où la température de transition vitreuse faible se situe dans l'intervalle allant de -60°C à 84°C.

4. Film rétractable selon l'une quelconque des revendications 1 à 3, où le film rétractable est un film monocouche ou un film multicouche.

5. Film rétractable selon la revendication 4, où le film rétractable est un film multicouche et une deuxième couche rétractable comprend un polymère rétractable ayant une température de transition vitreuse élevée et un polymère rétractable ayant une température de transition vitreuse faible.

6. Film rétractable selon l'une quelconque des revendications 1 à 5, où le film rétractable comprend un élastomère.

7. Film rétractable selon l'une quelconque des revendications 1 à 6, où le rapport pondéral du copolymère de polyoléfine cyclique ayant une température de transition vitreuse élevée et du copolymère de polyoléfine cyclique ayant une température de transition vitreuse faible dans la première couche du film rétractable se situe dans l'intervalle allant de 60:40 à 1:99.

8. Film rétractable selon l'une quelconque des revendications 1 à 7, où la couche de coeur est composée en outre d'un matériau choisi parmi le groupe consistant en un polyéthylène basse densité, un polyéthylène basse densité linéaire, un polyéthylène moyenne densité, un polymère d'acétates d'éthyle et de vinyle, un polypropylène, des plastomères, un polymère de styrène-éthylène-butène-styrène, un poly(styrène-butadiène-styrène), un poly(styrène-isoprène-styrène) (SIS), un téréphtalate modifié par le glycol (PETG), un poly(téréphtalate d'éthylène) (PET) et leurs mélanges.

9. Film rétractable selon l'une quelconque des revendications 1 à 8, où le film est un film multicouche et les couches comprenant un mélange d'au moins un polymère à Tv élevée et un polymère à Tv faible composent au moins environ 5% de l'épaisseur totale du film multicouche.

10. Film rétractable selon l'une quelconque des revendications 1 à 8, où le film est un film multicouche et les couches comprenant un mélange d'au moins un polymère à Tv élevée et un polymère à Tv faible composent d'environ 2% à environ 30% de l'épaisseur totale du film multicouche.

11. Procédé de préparation d'un film rétractable, où le procédé comprend :
la préparation d'un mélange selon l'une quelconque des revendications 1 à 10, et
la formation d'un film à partir du mélange.

12. Procédé selon la revendication 11, où le film est un film monocouche ou un film multicouche préparé à partir du mélange.

13. Procédé selon la revendication 11 ou 12, où le film est formé par extrusion.
